# EUROPÄISCHE PATENTSCHRIFT

(11) **EP 2 038 558 B1**
(45) Veröffentlichungstag und Bekanntmachung des Hinweises auf die Patenterteilung: **18.09.2013**
(21) Anmeldenummer: 07725853.1
(22) Anmeldetag: 05.06.2007
(51) Int. Cl.: F16C 3/03, F16D 3/06, F16D 3/68, F16F 1/362, F16F 15/121, F16F 15/124

(54) **DREHMOMENTÜBERTRAGUNGSEINRICHTUNG**
TORQUE TRANSMISSION DEVICE
DISPOSITIF DE TRANSMISSION DE COUPLE

(30) Priorität: 11.07.2006 DE 102006032312
(43) Veröffentlichungstag der Anmeldung: 25.03.2009
(73) Patentinhaber: Bayerische Motoren Werke Aktiengesellschaft, 80809 München (DE)
(72) Erfinder: SCHNEIDER, Franz, 80937 München (DE); GORSKI, Ekkehard, 81827 München (DE)
(86) Internationale Anmeldenummer: PCT/EP2007/004989
(87) Internationale Veröffentlichungsnummer: WO 2008/006425

(56) Entgegenhaltungen:
- EP-A1- 0 893 613
- DE-A1-102004 051 340
- US-A- 5 460 574

## Beschreibung

Die vorliegende Erfindung betrifft eine Drehmomentübertragungseinrichtung gemäß dem Oberbegriff des Patentanspruches 1.

Eine derartige Drehmomentübertragungsrichtung ist aus der DE 10 2004 051 340 A1 bekannt.

Aufgabe der Erfindung ist es, die aus der DE 10 2004 051 340 A1 bekannte Drehmomentübertragungseinrichtung, die bei einer Relativverdrehung der beiden Rohre in einem ersten Winkelbereich eine relativ flache Kennlinie und daran anschließend, einen Bereich starker Kennlinienprogression aufweist, so zu modifizieren, dass sie für weitere, insbesondere allgemeine Maschinenbauanwendungen geeignet ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist die aus der DE 10 2004 051 340 A1 bekannte Drehmomentübertragungseinrichtung, die ein äußeres Rohr mit einem unkreisförmigen Innenumfang und ein in dem äußeren Rohr angeordnetes inneres Rohr mit einem unkreisförmigen Außenumfang aufweist. Ausdrücklich sei darauf hingewiesen, dass der Begriff "inneres Rohr" in der folgenden Beschreibung und in den Patentansprüchen so zu verstehen ist, dass es sich hierbei auch um eine Stange handeln kann, d.h. um ein Bauteil mit einem Vollquerschnitt. "Unkreisförmig" kann z. B. oval, mehreckig, "zahnartig" o. ä. bedeuten. Die beiden Rohre können beispielsweise einen Vieleckquerschnitt mit gleicher Eckenzahl aufweisen. Denkbar sind z. B. quadratische oder dreieckförmige Querschnitte.

Zwischen den beiden Rohren ist ein Zwischenraum vorgesehen. Der Zwischenraum kann sich in "Umfangsrichtung" der beiden Rohre erstrecken. Dadurch haben die beiden Rohre ein gewisses Relativverdrehspiel. So kann beispielsweise an der Innenseite des Außenrohrs eine "Innenverzahnung" und an der Außenseite des Innenrohrs eine in die Innenverzahnung eingreifende "Außenverzahnung" vorgesehen sein, wobei die "Verzahnungen" in Umfangsrichtung ein Zahnspiel aufweisen, durch das der "Zwischenraum" gebildet ist. Zusätzlich kann ein sich in radialer Richtung zwischen den beiden Rohren erstreckender Zwischenraum vorgesehen sein.

In dem Zwischenraum ist mindestens ein elastisches drahtkissenartiges Element angeordnet. Das drahtkissenartige Element verleiht der Drehmomentübertragungseinrichtung Feder- bzw. Dämpfungseigenschaften und verringert somit die die Übertragung von Drehschwingungen von dem einen Rohr auf das andere Rohr bzw. umgekehrt.

Der Begriff "drahtkissenartiges Element" ist äußerst breit zu verstehen. Das drahtkissenartige Element kann z. B. die Struktur eines Geflechts, eines Gewirks oder eines Gestricks aufweisen. Es kann aus einem bzw. aus einer Vielzahl von Federstahldrähten hergestellt sein kann. Die einzelnen Federstahldrähte können identisch oder unterschiedlich gestaltet sein. Sie können abschnittsweise oder ganz mit einer Beschichtung, z.B. einem Elastomer, einer Gummierung o.ä. versehenen sein, welche einem solchen drahtkissenartigen Element eine hohe "innere Reibung" verleiht, sofern dies gewünscht ist. Dadurch kann gezielt die Dämpfungscharakteristik anwendungsspezifisch beeinflusst werden.

Bei geringen Relativverdrehwinkeln weist das mindestens eine drahtkissenartige Element eine geringe "Federhärte" auf. Das heißt, die Torsionskennlinie der "Tube-In-Tube-Anordnung" ist bei geringen Relativtorsionswinkeln flach. Wenn das mindestens eine drahtkissenartige Element ganz zusammengedrückt ist, d. h. wenn es auf "Block" geht, steigt die Torsionskennlinie steil an. Eine derartige Kennliniencharakteristik ist für verschiedene Anwendungen von Vorteil.

Ausgehend von einer derartigen Anordnung, die zum großen Teil aus der eingangs genannten DE 10 2004 051 340A1 bekannt ist, besteht der Grundgedanke der Erfindung darin, die Drehmomentübertragungseinrichtung so zu gestalten, dass sie zusätzlich zu dem Drehfreiheitsgrad in Umfangsrichtung der beiden Rohre einen "Längenausgleich" in Rohrlängsrichtung ermöglicht und zwar auch während ihres Betriebs, d.h. auch "unter Drehmomentlast", was bei vielen Anwendungen erforderlich ist. Eine derartige Drehmomentübertragungseinrichtung kann in entsprechender Dimensionierung z.B. im Gelenkwellenstrang eines Fahrzeugs, in einem Lenkantrieb oder in einer Vielzahl anderer Maschinenbauanwendungen eingesetzt werden. Die Rohre der Drehmomentübertragungseinrichtung sind dabei so angeordnet, dass sie auch "unter Last", d.h. wenn Drehmoment von dem einen Rohr über das mindestens eine drahtkissenartige Element auf das andere Rohr übertragen wird, in Rohrlängsrichtung verschieblich zueinander sind.

Vorzugsweise wird dies dadurch erreicht, dass der Innenumfang des äußeren Rohrs und der Außenumfang des inneren Rohrs zumindest über eine gewisse Rohrlänge jeweils einen im Wesentlichen konstant bleibenden Querschnitt aufweisen, was ein gegenseitiges Verschieben der beiden Rohre, d.h. ein "Gleiten" des einen Rohrs auf dem anderen Rohr in Rohrlängsrichtung ermöglicht. Wesentlich hierfür ist, dass Umfangsabschnitte des inneren Rohrs, welche bei einer Verdrehung der beiden Rohre eine Drehmomentübertragung bewirken, in entsprechend langen sich in Rohrlängsrichtung erstreckenden "Ausnehmungen" des äußeren Rohrs verschieblich sind. Haben die Umfangsabschnitte des inneren Rohrs, die eine Drehmomentübertragung bewirken, jeweils eine Länge "a" und soll die Drehmomentübertragungseinrichtung einen Verschiebeweg der Länge "s" ermöglichen, so müssen die Ausnehmungen im äußeren Rohr, in denen die entsprechenden Umfangsabschnitte des inneren Rohrs verschieblich sind, mindestens eine Länge "a+s" haben.

Für manche Anwendungen kann es auch sinnvoll sein, einen "gedämpften Endanschlag" vorzusehen. So können z.B. die axialen Enden der im äußeren Rohr vorgesehenen Ausnehmungen konisch, d.h. sich radial und/oder in Umfangsrichtung verjüngend gestaltet sein. Dies kann z.B. bei einer Anwendung der Drehmomentübertragungseinrichtung im Gelenkwellenstrang eines Fahrzeugs sinnvoll sein. Bei einem Crash kann es dazu kommen, dass die Gelenkwelle gestaucht wird. Eine in den Gelenkwellenstrang integrierte Drehmomentübertragungseinrichtung würde dann maximal zusammen geschoben werden und zwar weiter als dies in normalen Betriebssituationen der Fall ist. Die drehmomentübertragenden Abschnitte des inneren Rohrs würden in Axialrichtung auf Anschlag mit den axialen Enden der im äußeren Rohr vorgesehenen Ausnehmungen gehen. Um zu verhindern, dass dies schlagartig geschieht, kann es sinnvoll sein, die axialen Enden der Ausnehmungen sich verjüngend zu gestalten. Alternativ oder ergänzend dazu können auch Dämpfungselemente, z.B. drahtkissenartige Dämpfungselemente, Gummipuffer o.ä. vorgesehen sein, die in einer solchen Situation das "Auftreffen" der drehmomentübertragenden Abschnitte des inneren Rohrs auf die axialen Enden der Ausnehmungen des äußeren Rohrs zumindest in gewissem Umfang dämpfen.

Nach einer Weiterbildung der Erfindung ist vorgesehen, dass das mindestens eine drahtkissenartige Element auf einem der beiden Rohre in Axialrichtung festgelegt ist. Dadurch ist sichergestellt, dass sich das mindestens eine drahtkissenartige Element stets in einer eindeutig definierten Position befindet. Das mindestens eine drahtkissenartige Element kann z.B. auf dem Innenumfang des äußeren Rohrs oder auf dem Außenumfang des inneren Rohrs in Rohrlängsrichtung festgelegt sein; dementsprechend kann vorgesehen sein, dass das drahtkissenartige Element auf der Außenseite des inneren Rohrs bzw. auf der Innenseite des äußeren Rohrs in Rohrlängsrichtung verschieblich ist. Eine axiale Festlegung in jeder der beiden Richtungen kann z.B. durch durch einen Rohrabsatz, eine Wellenmutter, einen Sicherungsring etc. erreicht werden.

Vorzugsweise sind das Drahtkissen und die Außenseite des inneren Rohrs bzw. die Innenseite des äußeren Rohrs so aufeinander abgestimmt, dass sich ein möglichst geringer Reibungskoeffizient ergibt, insbesondere in Richtung des Verschiebefreiheitsgrades, d.h. in Rohrlängsrichtung. Es kann z.B. vorgesehen sein, dass das drahtkissenartige Element und die Außenseite des inneren Rohrs bzw. die Innenseite des äußeren Rohrs mit einer reibungsarmen Beschichtung versehen sind. Zusätzlich können das drahtkissenartige Element und die Außenseite des inneren Rohrs bzw. die Innenseite des äußeren Rohrs mit einem Schmiermittel, z.B. mit einem Schmierfett, versehen sein.

Zur Minimierung axialer Reibung, d. h. zur Minimierung von Stick-Slipeffekten bei axialer Verschiebung der beiden Rohre sollten die beiden Rohre und das mindestens eine drahtkissenartige Element so aufeinander abgestimmt sein, dass zumindest in Betriebszuständen, in denen kein oder nur ein geringes Drehmoment übertragen wird, das mindestens eine drahtkissenartige Element im Wesentlichen radialspannungsfrei ist und kaum oder nur geringe Radialkräfte zwischen dem Innenumfang des äußeren Rohrs und dem Außenumfang des inneren Rohrs überträgt.

Aufgrund des niedrigen Reibkoeffizienten zwischen dem mindestens einen drahtkissenartigen Element und dem Außenumfang des inneren Rohrs bzw. dem Innenumfang des äußeren Rohrs treten kaum Stick-Slipeffekte auf, was bei einer Vielzahl von Anwendungsmöglichkeiten von Bedeutung ist, bei denen ein axialer Längenausgleich unter Drehmomentlast und eine Abfederung bzw. Dämpfung von Drehschwingungen zu leisten ist.

Prinzipiell ist auch denkbar, dass das mindestens eine drahtkissenartige Element sowohl auf dem Außenumfang des inneren Rohrs als auch auf dem Innenumfang des äußeren Rohrs axial festgelegt ist. In diesem Fall ist der mögliche Verschiebeweg der beiden Rohre aber auf den "axialen Elastizitätsweg" des drahtkissenartigen Elements begrenzt.

Nach einer Weiterbildung der Erfindung sind die beiden Rohre relativ zueinander zentriert. Eine Zentrierung kann z.B. dadurch erreicht werden, dass Umfangsabschnitte des Innenumfangs des äußeren Rohrs und/oder Umfangsabschnitte des Außenumfangs des inneren Rohrs kreisförmig sind, wobei der Innenumfang des äußeren Rohrs in solchen Bereichen "flächig" am Außenumfang des inneren Rohrs anliegt und ähnlich wie bei einem Axialgleitlager darauf gleiten kann.

Alternativ dazu kann vorgesehen sein, dass lediglich eines der beiden Rohre in einzelnen Umfangsabschnitten kreisförmig gestaltet ist und das jeweils andere Rohr mit zugeordneten sickenartigen Einbuchungen oder Ausbuchtungen versehen ist, die an diesen kreisförmigen Abschnitten des anderen Rohrs anliegen.

In dem Zwischenraum zwischen den beiden Rohren kann genau ein einziges elastisches Drahtkissenartiges Element angeordnet sein, das sich manschettenartig bzw. strumpfartig um den Außenumfang des inneren Rohrs herum erstreckt. Anstelle eines einzigen schlauchförmigen "Drahtkissens" kann auch ein "Gestrickband" direkt auch das innere Rohr aufgewickelt werden. Alternativ dazu können in dem Zwischenraum zwischen den beiden Rohren in Umfangsrichtung und/oder in Rohrlängsrichtung verteilt auch zwei oder mehrere blockartige bzw. ringsegmentartige drahtkissenartige Elemente angeordnet sein. In Falle ringartiger "Drahtkissenelemente" können diese über den Umfang unterschiedlich stark verpresst sein, wodurch sich die Kennlinie der Drehmomentübertragung optimieren lässt.

Zur Darstellung eines bestimmten Elastizitätsverhaltens können im Falle mehrerer elastischer drahtkissenartiger Elemente diese jeweils unterschiedliche Elastizitätskennlinien aufweisen. Die einzelnen drahtkissenartige Elemente können z.B. unterschiedlich gestaltet oder/und aus unterschiedlichen Materialien hergestellt sein.

Wie bereits angedeutet, sind vielfältige Rohrquerschnittsformen denkbar. Alternativ zu ovalen, mehrkantigen oder verzahnten Rohrquerschnitten können auch Rohre mit mehreren in Umfangsrichtung voneinander beabstandeten Sicken verwendet werden. Die Sicken erstrecken sich in Rohrlängsrichtung und können z. B. durch Innenhochdruckumformung der Rohre hergestellt werden.

Im Folgenden wird die Erfindung anhand von Ausführungsbeispielen im Zusammenhang mit der Zeichnung näher erläutert. Es zeigen:
- Figur 1: einen Querschnitt durch eine Tube-In-Tube-Welle gemäß der Erfindung;
- Figur 2: ein qualitative Darstellung des Kennlinienverlaufs der Tube-In-Tube-Welle der Figur 1; und
- Figur 3: ein weiteres Ausführungsbeispiel einer Tube-In-Tube-Welle gemäß der Erfindung.

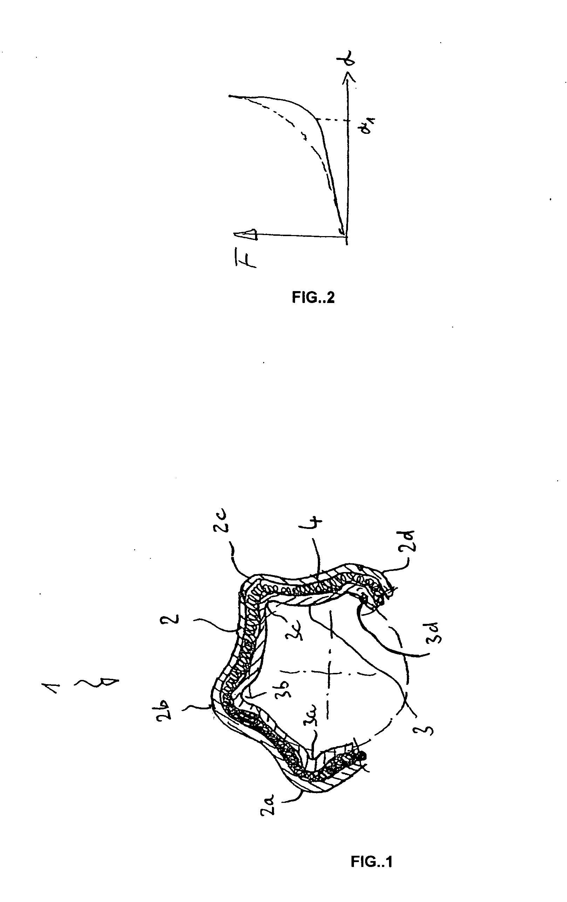

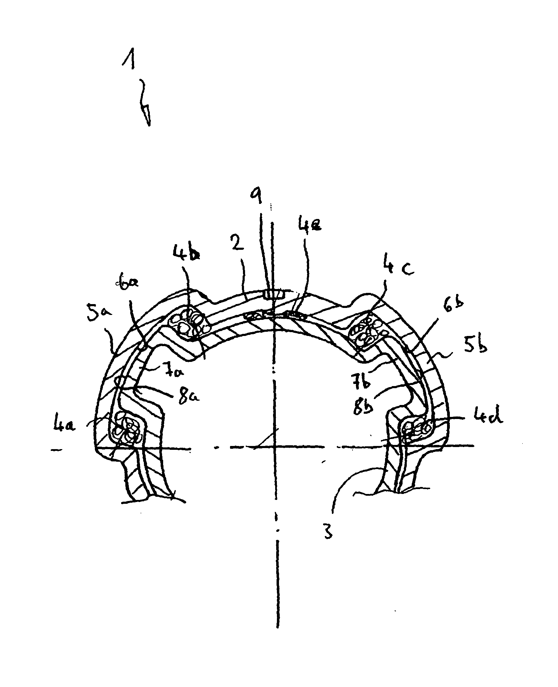

Figur 1 zeigt eine Tube-In-Tube-Welle 1 mit einem Außenrohr 2 und einem in das Außenrohr 2 eingeschobenen Innenrohr 3. Das Außenrohr 2 und das Innenrohr 3 sind im Wesentlichen komplementär zueinander gestaltet. Die beiden Rohre 2, 3 weisen in Umfangsrichtung voneinander beabstandet mehrere sickenartige Ausformungen 2a-2d bzw. 3a-3d auf, die sich jeweils in Rohrlängsrichtung, d. h. senkrecht zur Zeichenebene erstrecken. Die sickenartigen Ausformungen 3a-3b des inneren Rohrs 3 greifen in die sickenartigen Ausformungen 2a-2d des Außenrohrs 2 ein. Wie aus Figur 1 ersichtlich ist, ist zwischen dem Außenrohr 2 und dem Innenrohr 3 ein Spalt vorgesehen, in dem ein elastisches Drahtkissen bzw. eine elastische "Drahthülse" 4 angeordnet ist, die der Form des Spalts angepasst ist.

Aufgrund des Zwischenraums zwischen den beiden Rohren 2, 3 können die beiden Rohre 2, 3 um einen vorgegebenen Winkel relativ zueinander verdreht werden. Dabei wird das Drahtkissen in einigen Bereichen komprimiert, in an deren Bereichen gestreckt. Bei geringen Relativverdrehwinkeln, die kleiner als α₁ (vgl. Fig. 2) sind, weist die Kennlinie einen relativ flachen Kennlinienverlauf auf. Bei einem Relativverdrehwinkel, der im Bereich von α₁ liegt, ist das Drahtkissen 4 nahezu vollständig zusammengedrückt. Das heißt, im Bereich von α₁ geht das Drahtkissen auf "Block", was zu einem starken Anstieg der Kennlinie führt.

Bei dem in Figur 1 gezeigten Ausführungsbeispiel ist ein einziges elastisches drahtkissenartiges Element vorgesehen, das sich manschettenartig um das Innenrohr 3 herum erstreckt.

Figur 3 zeigt ein Ausführungsbeispiel einer Tube-In-Tube-Anordnung 1, bei der das Außenrohr 2 mit mehreren in Umfangsrichtung voneinander beabstandeten taschenartigen Ausbuchtungen 5a, 5b versehen ist, deren radiale Innenseiten 6a, 6b in Umfangsrichtung gesehen im Wesentlichen kreisförmig sind. Das Innenrohr 3 ist mit einer entsprechenden Anzahl taschenartiger Ausbuchtungen 7a, 7b versehen, deren radiale Außenseiten 8a, 8b ebenfalls kreisförmig gestaltet sind. Wie aus Figur 3 ersichtlich ist, erstrecken sich die taschenartigen Ausbuchtungen 7a, 7b in Umfangsrichtung gesehen über einen kürzeren Umfangsabschnitt als die taschenartigen Ausbuchtungen 5a, 5b, was eine Relativverdrehung des Außenrohres 2 in Bezug auf das Innenrohr 3 ermöglicht. Das Außenrohr 2 und das Innenrohr 3 können so beschaffen sein, dass die taschenartigen Ausbuchtungen 7a, 7b im Wesentlichen spielfrei in den taschenartigen Ausbuchtungen 6a, 6b gleiten können, wodurch eine Zentrierung des Innenrohrs 3 im Außenrohr 2 sichergestellt ist.

Um zu erreichen, dass das Außenrohr 2 in Bezug auf das Innenrohr 3 verschieblich ist, ist vorgesehen, dass die taschenartigen Ausbuchtungen 5a, 5b in Längsrichtung der Rohre 2, 3, d. h. senkrecht zur Zeichenebene gesehen länger sind als die taschenartigen Ausbuchtungen 7a, 7b des Innenrohrs 3. Haben die taschenartigen Ausbuchtungen 7a, 7b des Innenrohrs 3 jeweils eine Länge "a" und soll die Drehmomentübertragungseinrichtung einen Verschiebeweg der Länge "s" ermöglichen, so müssen die taschenartigen Ausbuchtungen 5a, 5b in Rohrlängsrichtung, d.h. senkrecht zur Zeichenebene, mindestens eine Länge "a+s" haben. Entsprechendes gilt natürlich auch für das in Fig. 1 gezeigte Ausführungsbeispiel.

Wie aus Figur 3 ersichtlich ist, sind in Zwischenräumen zwischen den taschenartigen Ausbuchtungen 7a, 7b und den taschenartigen Ausbuchtungen 5a, 5b jeweils elastische drahtkissenartige Elemente 4a - 4d angeordnet, die bei einer Relativverdrehung der beiden Rohre 2, 3 die Drehbewegung bzw. Drehschwingung abfedern und dämpfen.

Zusätzlich ist bei dem hier gezeigten Ausführungsbeispiel im Bereich zwischen zweier in Umfangsrichtung aufeinander folgender taschenartiger Ausbuchtungen 7a, 7b des Innenrohrs 3 im Bereich zwischen dem Außenumfang des Innenrohrs 3 und dem Innenumfang des Außenrohrs 2 ein weiteres drahtkissenartiges Element 4e angeordnet, das hier nahezu "auf Block" zusammengepresst ist. Durch ein bzw. mehrere derartige über den Umfang verteilt angeordnete (blockgepresste) drahtkissenartige Elemente kann das Innenrohr 3 im Außenrohr 2 zentriert sein. Das "auf Block Pressen" kann nachträglich durch Einprägen einer Sicke 9 von der Außenseite des Außenrohrs 2 her erfolgen, was sehr kostengünstig ist.

## Patentansprüche

1. Drehmomentübertragungseinrichtung (1) mit einem äußeren Rohr (2), das einen unkreisförmigen Innenumfang aufweist, und einem in das äußere Rohr (2) eingeschobenen inneren Rohr (3), das einen unkreisförmigen Außenumfang aufweist, wobei die beiden Rohre (2, 3) aufgrund eines zwischen dem Innenumfang und dem Außenumfang vorgesehenen Zwischenraums ein vorgegebenes Verdrehspiel aufweisen, und wobei in dem Zwischenraum zwischen den beiden Rohren (2, 3) mindestens ein elastisches drahtkissenartiges Element (4a - 4e) angeordnet ist, **dadurch gekennzeichnet, dass** die beiden Rohre (2, 3) in einer Rohrlängsrichtung verschieblich in Bezug zueinander angeordnet sind, derart, dass sie auch unter Drehmomentlast einen Längenausgleich ermöglichen, wobei der Innenumfang des äußeren Rohrs (2) und der Außenumfang des inneren Rohrs (3) zumindest über eine gewisse Rohrlänge jeweils einen im Wesentlichen konstant bleibenden Querschnitt aufweisen.

2. Drehmomentübertragungseinrichtung (1) nach Anspruch 1, **dadurch gekennzeichnet, dass** das mindestens eine drahtkissenartiges Element (4a - 4e) auf dem Innenumfang des äußeren Rohrs (2) oder auf dem Außenumfang des inneren Rohrs (3) in Rohrlängsrichtung festgelegt und auf dem Außenumfang des inneren Rohrs (3) bzw. auf dem Innenumfang des äußeren Rohrs (2) in Rohrlängsrichtung verschieblich ist.

3. Drehmomentübertragungseinrichtung (1) nach einem der Ansprüche 1 oder 2, **dadurch gekennzeichnet, dass**, zur Minimierung axialer Reibung, das mindestens eine elastische drahtkissenartige Element (4a -4e) zumindest in Betriebszuständen, in denen kein oder nur ein geringes Drehmoment übertragen wird, im Wesentlichen radialspannungsfrei ist und kaum oder nur geringe Radialkräfte zwischen dem Innenumfang des äußeren Rohrs (2) und dem Außenumfang des inneren Rohrs (3) überträgt.

4. Drehmomentübertragungseinrichtung (1) nach einem der Ansprüche 1 - 3, **dadurch gekennzeichnet, dass** Umfangsabschnitte des Innenumfangs des äußeren Rohrs (2) und/oder Umfangsabschnitte des Außenumfangs des inneren Rohrs (3) kreisförmig sind.

5. Drehmomentübertragungseinrichtung (1) nach einem der Ansprüche 1 - 4, **dadurch gekennzeichnet, dass** der Innenumfang des äußeren Rohrs (2) an mehreren zur gegenseitigen Zentrierung der Rohre vorgesehenen Umfangsbereichen am Außenumfang des inneren Rohrs (3) anliegt.

6. Drehmomentübertragungseinrichtung (1) nach einem der Ansprüche 1 - 5, **dadurch gekennzeichnet, dass** in dem Zwischenraum zwischen den beiden Rohren (2, 3) genau ein einziges elastisches drahtkissenartiges Element (4) angeordnet ist.

7. Drehmomentübertragungseinrichtung (1) nach Anspruch 6, **dadurch gekennzeichnet, dass** elastische drahtkissenartige Element (4) sich manschettenartig um den Außenumfang des inneren Rohrs (3) herum erstreckt.

8. Drehmomentübertragungseinrichtung (1) nach einem der Ansprüche 1 - 5, **dadurch gekennzeichnet, dass** in dem Zwischenraum zwischen den beiden Rohren (2, 3) in Umfangsrichtung verteilt mehrere elastische drahtkissenartige Elemente (4a, 4e) angeordnet sind.

9. Drehmomentübertragungseinrichtung (1) nach einem der vorangehenden Ansprüche, **dadurch gekennzeichnet, dass** in dem Zwischenraum zwischen den beiden Rohren (2, 3) mindestens zwei in Rohrlängsrichtung voneinander beabstandet angeordnete elastische drahtkissenartige Elemente (4) vorgesehen sind.

10. Drehmomentübertragungseinrichtung (1) nach einem der Ansprüche 8 oder 9, **dadurch gekennzeichnet, dass** mindestens zwei elastische drahtkissenartige Elemente (4a - 4e) vorgesehen sind, die unterschiedliche Elastizitätskennlinien aufweisen.

11. Drehmomentübertragungseinrichtung (1) nach einem der Ansprüche 1 - 10, **dadurch gekennzeichnet, dass** das mindestens eine drahtkissenartige Element (4a - 4e) zumindest abschnittsweise von einem Elastomer umgeben ist.

12. Drehmomentübertragungseinrichtung (1) nach einem der Ansprüche 1 - 11 **dadurch gekennzeichnet, dass** die beiden Rohre (2, 3) jeweils mehrere in Umfangsrichtung voneinander beabstandete Sicken(2a-2d; 3a-3d) oder taschenartige Ausbuchtungen (7a, 7b; 5a, 5b) aufweisen, die sich in Längsrichtung der Rohre (2, 3) erstrecken, wobei die Sicken (3a-3d) bzw. die taschenartigen Ausbuchtungen (7a, 7b) des inneren Rohrs (3) in zugeordnete Sicken (2a-2d) bzw. in zugeordnete taschenartige Ausbuchtungen (5a, 5b) des äußeren Rohrs (2) eingreifen.

13. Drehmomentübertragungseinrichtung (1) nach einem der Ansprüche 1 - 12, **dadurch gekennzeichnet, dass** die beiden Rohre (2, 3) einen Vieleckquerschnitt mit gleicher Eckenzahl aufweisen.

14. Drehmomentübertragungseinrichtung (1) nach einem der Ansprüche 1 - 12, **dadurch gekennzeichnet, dass** die beiden Rohre (2, 3) jeweils einen quadratischen Querschnitt aufweisen.

15. Drehmomentübertragungseinrichtung (1) nach einem der Ansprüche 1 - 14, **dadurch gekennzeichnet, dass** das mindestens eine drahtkissenartige Element (4a-4e) die Struktur eines Geflechts hat.

16. Drehmomentübertragungseinrichtung (1) nach einem der Ansprüche 1 - 14 **dadurch gekennzeichnet, dass** das mindestens eine drahtkissenartige Element die Struktur eines Gewirks hat.

17. Drehmomentübertragungseinrichtung (1) nach einem der Ansprüche 1 - 14, **dadurch gekennzeichnet, dass** das mindestens eine drahtkissenartige Element die Struktur eines Gestricks hat.

## Claims

1. A torque-transmitting device (1) comprising an outer tube (2) having a non-circular inner periphery and an inner tube (3) inserted into the outer tube (2) and having a non-circular outer periphery, wherein the two tubes (2, 3) have a set torsional clearance owing to a space provided between the inner periphery and the outer periphery and wherein at least one resilient wire cushion-like element (4a- 4e) is disposed in the space between the two tubes (2, 3), **characterised in that** the two tubes (2, 3) are movable longitudinally relative to one another, so that even under torque they can be made equal in length, wherein the inner periphery of the outer tube (2) and the outer periphery of the inner tube (3) each have a cross-section which remains substantially constant at least over a certain tube length.

2. A torque transmitting device (1) according to claim 1, **characterised in that** the at least one wire cushion-like element (4a- 4e) is fastened in the longitudinal direction to the inner periphery of the outer tube (2) or to the outer periphery of the inner tube (3) and is movable in the longitudinal direction on the outer periphery of the inner tube (3) or on the inner periphery of the outer tube (2).

3. A torque transmitting device (1) according to claim 1 or claim 2, **characterised in that** in order to reduce axial friction, the at least one resilient wire cushion-like element (4a- 4e), is substantially free from radial tension, at least under operating conditions in which little or no torque is transmitted, and transmits little or no radial forces between the inner periphery of the outer tube (2) and the outer periphery of the inner tube (3).

4. A torque-transmitting device (1) according to any of claims 1 - 3, **characterised in that** portions of the inner periphery of the outer tube (2) and portions of the outer periphery of the inner tube (3) are circular.

5. A torque-transmitting device (1) according to any of claims 1 - 4, **characterised in that** the inner periphery of the outer tube (2) abuts the outer periphery of the inner tube (3) at a number of places provided for centring the tubes relative to one another.

6. A torque-transmitting device (1) according to any of claims 1-5, **characterised in that** exactly one single resilient wire cushion-like element (4), is disposed in the space between the two tubes (2, 3).

7. A torque-transmitting device (1) according to claim 6, **characterised in that** the resilient wire cushion-like element (4) extends like a sleeve round the outer periphery of the inner tube (3).

8. A torque-transmitting device (1) according to any of claims 1 - 5, **characterised in that** a number of resilient wire cushion-like elements (4a, 4e) distributed in the peripheral direction are disposed in the space between the two tubes (2, 3).

9. A torque-transmitting device (1) according to any of the preceding claims, **characterised in that** at least two longitudinally spaced resilient wire cushion-like elements (4) are provided in the space between the two tubes (2, 3).

10. A torque-transmitting device (1) according to claim 8 or claim 9, **characterised in that** at least two resilient wire cushion-like elements (4a-4e) are provided and have different elasticity characteristics.

11. A torque-transmitting device (1) according to any of claims 1 - 10, **characterised in that** the at least one wire cushion-like element (4a- 4e) is at least partly surrounded by an elastomer.

12. A torque-transmitting device (1) according to any of claims 1 - 11, **characterised in that** the two tubes (2, 3) each have a number of peripherally spaced corrugations (2a- 2d; 3a- 3d) or pocket-like bulges (7a, 7b; 5a, 5b) extending in the longitudinal direction of the tubes (2, 3), wherein the corrugations (3a- 3d) or pocket-like bulges (7a, 7b) on the inner tube (3) engage into corresponding corrugations (2a- 2d) or corresponding pocket-like bulges (5a, 5b) in the outer tube (2).

13. A torque-transmitting device (1) according to any of claims 1 - 12, **characterised in that** the two tubes (2, 3) have a polygonal cross-section with the same number of corners.

14. A torque-transmitting device (1) according to any of claims 1 - 12, **characterised in that** the two tubes (2, 3) each have a square cross-section.

15. A torque-transmitting device (1) according to any of claims 1 - 14, **characterised in that** the at least one wire cushion-like element (4a-4e) has the structure of a mesh.

16. A torque-transmitting device (1) according to any of claims 1 - 14, **characterised in that** at least one wire cushion-like element has the structure of a weft.

17. A torque-transmitting device (1) according to any of claims 1 - 14, **characterised in that** at least one wire cushion-like element has the structure of a knitted fabric.

## Revendications

1. Dispositif de transmission de couple de rotation (1) comportant un tube externe (2) dont la périphérie interne n'est pas circulaire et un tube interne (3) emmanché dans le tube externe (2) et dont la périphérie externe n'est pas circulaire, les deux tubes (2, 3) présentant un jeu de rotation prédéfini en raison d'un intervalle situé entre la périphérie externe et la périphérie interne, et dans l'intervalle situé entre les deux tubes (2, 3) étant disposé au moins un élément formant un coussin de fil élastique (4a, 4e),
**caractérisé en ce que**
les deux tubes (2, 3) sont montés mobiles en translation l'un par rapport à l'autre dans leur direction longitudinale de façon à permettre également, sous une charge de couple de rotation, un équilibrage de longueur, la périphérie interne du tube externe (2) et la périphérie externe du tube interne (3) présentant respectivement, au moins sur une longueur donnée une section restant essentiellement constante.

2. Dispositif de transmission de couple de rotation (1) conforme à la revendication 1,
**caractérisé en ce que**
l'élément formant coussin de fil (4a, 4e) est fixé dans la direction longitudinale des tubes sur la périphérie interne du tube externe (2) ou sur la périphérie externe du tube interne (3) et est mobile en translation dans la direction longitudinale des tubes sur la périphérie externe du tube interne (3) ou sur la périphérie interne du tube externe (2).

3. Dispositif de transmission de couple (1) conforme à l'une des revendications 1 ou 2,
**caractérisé en ce que**
pour réduire au maximum la friction axiale, l'élément formant un coussin de fil élastique (4a, 4e) est essentiellement exempt de tension radiale au moins dans des états de fonctionnement dans lesquels aucun ou seulement un faible couple de rotation est transmis, et ne transmet que peu ou seulement très faibles forces radiales entre la périphérie interne du tube externe (2) et la périphérie externe du tube interne (3).

4. Dispositif de transmission de couple de rotation (1) conforme à l'une des revendications 1-3,
**caractérisé en ce que**
des tronçons périphériques de la périphérie interne du tube externe (2) et/ou des tronçons périphériques de la périphérie externe du tube interne (3) sont circulaires.

5. Dispositif de transmission de couple de rotation (1) conforme à l'une des revendications 1-4,
**caractérisé en ce que**
la périphérie interne du tube externe (2) s'applique, contre la périphérie externe du tube interne (3) au niveau de plusieurs tronçons périphériques prévus pour le centrage mutuel des tubes.

6. Dispositif de transmission de couple de rotation (1) conforme à l'une des revendications 1-5,
**caractérisé en ce que**
dans l'intervalle entre les deux tubes (2, 3) est précisément monté un seul élément formant un coussin de fil élastique (4).

7. Dispositif de transmission de couple de rotation (1) conforme à la revendication 6,
**caractérisé en ce que**
l'élément formant un coussin de fil élastique (4) s'étend à la manière d'une manchette autour de la périphérie externe du tube interne (3).

8. Dispositif de transmission de couple de rotation (1) conforme à l'une des revendications 1-5,
**caractérisé en ce que**
dans l'intervalle situé entre les deux tubes (2, 3) sont montés plusieurs éléments formant coussins de fil élastiques (4a, 4e) répartis dans la direction périphérique.

9. Dispositif de transmission de couple de rotation (1) conforme à l'une des revendications précédentes,
**caractérisé en ce que**
dans l'intervalle situé entre les deux tubes (2, 3) sont montés au moins deux éléments formant coussins de fil élastiques (4) situés à distance l'un de l'autre dans la direction longitudinale des tubes.

10. Dispositif de transmission de couple de rotation (1) conforme à l'une des revendications 8 ou 9,
**caractérisé en ce qu'**
il est prévu au moins deux éléments formant coussins de fil élastiques (4a, 4e) ayant des caractéristiques d'élasticité différentes.

11. Dispositif de transmission de couple de rotation (1) conforme à l'une des revendications 1-10,
**caractérisé en ce que**
l'élément formant coussin de fil (4a, 4e) est entouré au moins par tronçons par un élastomère.

12. Dispositif de transmission de couple de rotation (1) conforme à l'une des revendications 1-11,
**caractérisé en ce que**
les deux tubes (2, 3) comportent respectivement plusieurs moulures (2a, 2d, 3a, 3b) ou plusieurs échancrures en forme de poches (7a, 7b, 5a, 5b) situées à distance les unes des autres en direction périphérique qui s'étendent dans la direction longitudinale des tubes (2, 3), les moulures (3a, 3b) ou les échancrures en forme de poches (7a, 7b) du tube interne (3) venant en prise dans des moulures (2a, 2b) ou des échancrures en forme de poches (5a, 5b) associées du tube externe (2).

13. Dispositif de transmission de couple de rotation (1) conforme à l'une des revendications 1-12,
**caractérisé en ce que**
les deux tubes (2, 3) ont une section polygonale avec le même nombre de sommets.

14. Dispositif de transmission de couple de rotation (1) conforme à l'une des revendications 1-12,
**caractérisé en ce que**
les deux tubes (2, 3) ont respectivement une section quadratique.

15. Dispositif de transmission de couple de rotation (1) conforme à l'une des revendications 1-14,
**caractérisé en ce que**
l'élément formant coussin de fil (4a, 4e) a la structure d'un tissage.

16. Dispositif de transmission de couple de rotation (1) conforme à l'une des revendications 1-14,
**caractérisé en ce que**
l'élément formant coussin de fil (4a, 4e) a la structure d'un tissu à mailles.

17. Dispositif de transmission de couple de rotation (1) conforme à l'une des revendications 1-14,
**caractérisé en ce que**
l'élément en forme de coussin de fil (4a, 4e) a la structure d'un tricotage.
